# EUROPEAN PATENT SPECIFICATION

(11) **EP 2 384 628 B1**
(45) Date of publication and mention of the grant of the patent: **27.08.2014**
(21) Application number: 11164652.7
(22) Date of filing: 03.05.2011
(51) Int. Cl.: A21C 3/02

(54) **APPARATUS FOR PROCESSING DOUGH, PARTICULARLY OF THE BREAD BAKING TYPE**
VORRICHTUNG FÜR DIE VERARBEITUNG VON TEIG, INSBESONDERE VON TEIG ZUM BACKEN VON BROT
DISPOSITIF POUR LE TRAITEMENT DE PÂTE, EN PARTICULIER DE PÂTE À PAIN

(30) Priority: 05.05.2010 IT PD20100143
(43) Date of publication of application: 09.11.2011
(73) Proprietor: Turri F.LLI S.R.L., 45023 Costa Di Rovigo (RO) (IT)
(72) Inventor: Saggioro, Andrea, 45100, Rovigo (IT)
(74) Representative: Modiano, Micaela Nadia

(56) References cited:
- EP-A1- 0 744 126
- EP-A1- 1 174 032
- GB-A- 860 154
- US-A- 5 180 593
- US-A1- 2005 170 031
- US-A1- 2006 162 580

## Description

The present invention relates to a machine for processing dough, particularly of the type for baking bread.

Nowadays, in the field of machines for processing dough designed for baking bread, machines called "dough dividers" are known.

These machines have the task of making portions of a sheet of dough which are all substantially the same size and the same weight.

These machines generally have an upper loading hopper, at the lower opening of which there is a first cutting device adapted to unload from the hopper pieces of dough, in succession, onto a first conveyor which feeds the pieces of dough to a rolling device.

The cutting device has two cutting elements, elongated and adjacent, which have blades that extend longitudinally thereto.

They are actuated in rotation toward each other along their longitudinal axes, which are parallel, so as to cut a piece of dough, during their rotation, thus unloading it onto the first conveyor.

The rolling device comprises two vertically associated roller sets which form a passage for the dough which is substantially vertical and downwardly narrowing.

Depending on the model of dough divider currently known, at least one of the roller sets is tilting, being generally pivoted at the axis of its upper roller.

There is also a device that is adapted to make the tilting roller set oscillate alternately so as to successively divaricate and restrict the passage duct of the dough defined between the roller sets.

In this way the dough is rolled, or made thinner with respect to the piece of dough introduced into the rolling device.

Furthermore, the dough, during this processing, is subjected to a mechanical action that produces a viscous differential sliding thereof between the inner layers and the surface layers, thus obtaining a sheet thereof.

Furthermore, in the rolling device the joining of the successive pieces of dough coming from the hopper is performed.

In a machine known currently, the first feeding device loads the head end of a piece of dough into the rolling device before the tail end of the preceding piece is processed by the rolling device so that, in the rolling device, the successive pieces of dough are joined together to form a single, continuous sheet.

During the processing, therefore, the dough crosses the roller sets in a substantially vertical direction, and from these it is unloaded onto a conveyor belt that brings it to a weighing and cutting device.

A dough feeding apparatus with rolls sets arranged in a V-shape, vertical configuration is known, for example, from EP 0 744 126 A1. A similar apparatus is known from EP 1 174 032 A1. The latter known apparatus includes a cutting apparatus and weighing conveyors, the cutting apparatus cutting the sheets of dough when the measurements of the conveyors correspond to a preset value.

The weighing and cutting devices known today involve the actuation of a blade upstream of a conveyor belt provided with a weighing device which, once it detects that the preset weight is reached by the sheet of dough that is transported on it, actuates the blade so as to make portions of dough that are substantially of the same weight.

Currently in the field of this type of machine, the need is strongly felt to develop structures that enable an effective rolling of the dough for the purpose of obtaining a result that is substantially similar to that which can be obtained by manual labour with the use of a rolling pin.

Indeed, using a rolling pin makes it possible to obtain a sheet of dough that is stretched differentially both at its opposite faces and on its inside with respect to its faces.

Furthermore another need that is felt by makers of this type of machine is to devise solutions that make it possible to make ever more compact machines.

The aim of the present invention is to provide a machine for processing dough, particularly for baking bread, which makes it possible to meet these needs, in particular by making it possible to obtain a sheet of dough of higher quality than the sheets for baking bread that can be obtained with the machines known today.

Within this aim, an object of the invention is to provide a machine that is more compact than the machines known today for the same quantity of dough that can be processed.

Another object of the invention is to provide a machine that makes it possible to obtain portions of a sheet of dough of the same weight and with substantially the same size more efficiently than with the machines known today.

Another object of the invention is to provide a machine that makes it possible to obtain portions of dough substantially of the same weight and of the same size in a more stable and durable manner than with the machines known today.

This aim, as well as these and other objects which will become better apparent hereinafter, are achieved by a machine for processing dough, according to the present invention, that has the features set forth in claim 1.

Further characteristics and advantages of the invention will become better apparent from the description of a preferred, but not exclusive, embodiment of the machine for processing dough according to the invention, illustrated by way of non-limiting example in the accompanying drawings wherein:
Figure 1 is a simplified diagram of a machine for processing dough, according to the invention;
Figure 2 is an enlarged-scale view of a detail of a machine for processing dough, according to the invention;
Figure 3 is a simplified diagram, in perspective, of a machine for processing dough, according to the invention;
Figure 4 is a perspective view of part of a machine for processing dough, according to the invention.

It should be noted that everything found to be already known during the patenting process is understood not to be claimed and to be the subject of a disclaimer.

With reference to the figures, the reference numeral 10 generally indicates a machine for processing dough, particularly of the type for baking bread, comprising a frame 11 which supports
- a hopper 12 for loading dough to be processed 13,
- means 14 for cutting pieces of dough 15 discharged from the hopper 12,
- a conveyor 16, which is arranged below the hopper 12 in order to receive the pieces of dough 15,
- a rolling device 17, which has a loading region 18 that faces the discharge end 19 of the conveyor 16, the loading region 18 being offset with respect to the hopper 12 so that it is not surmounted by it,
- a first advancement device 20 faced by the discharge region 22 of the rolling device 17,
- a second advancement device 21, arranged behind the first advancement device 20, with respect to the processing path defined for the dough in the machine 10.

The cutting means 14 are of a type that is known to the technician skilled in the art, for example they can comprise two elongated, counterrotating cutting elements provided with helical knives.

Conveniently, the cutting means 14 are controlled to cut pieces of dough 15 in such a way that the head 15a of one of them overlaps with the tail 15b of the previous one, in order to connect them together.

According to the invention, the machine 10 has a particular distinctive characteristic in that the rolling device 17 comprises two facing roller sets 23 and 24, which define between them a descent passage A for the pieces of dough 15, which, when the machine 10 is in use, is curved with respect to a horizontal arrangement and, with respect to this arrangement, is inclined with an average inclination B that is substantially comprised between 30° and 60° and preferably chosen from between 42° and 45°.

Moreover, according to the invention, the roller sets 23 and 24 are pivoted to each other so that they can mutually oscillate, means 25 being provided for the mutual oscillation of the roller sets 23 and 24 with an alternating oscillation C for mutual spacing and approach.

In particular, preferably the roller sets 23 and 24 are arranged along two converging arcs that delimit the passage A, descending and curvilinear, for the pieces of dough 15.

Advantageously, the passage A, during use, has a curvature with the concavity directed downward.

Moreover, preferably, a first one 23 of the roller sets 23 and 24 is pivoted to the second roller set 24 along an axis of oscillation D defined by the axis of the upper end roller 26a of the rollers 26a, 26b and 26c which form the second roller set 24.

In general, depending on the contingent needs, in alternative embodiments of the machine according to the invention, the first roller set is pivoted to the second roller set along the axis of a preset roller of the second roller set.

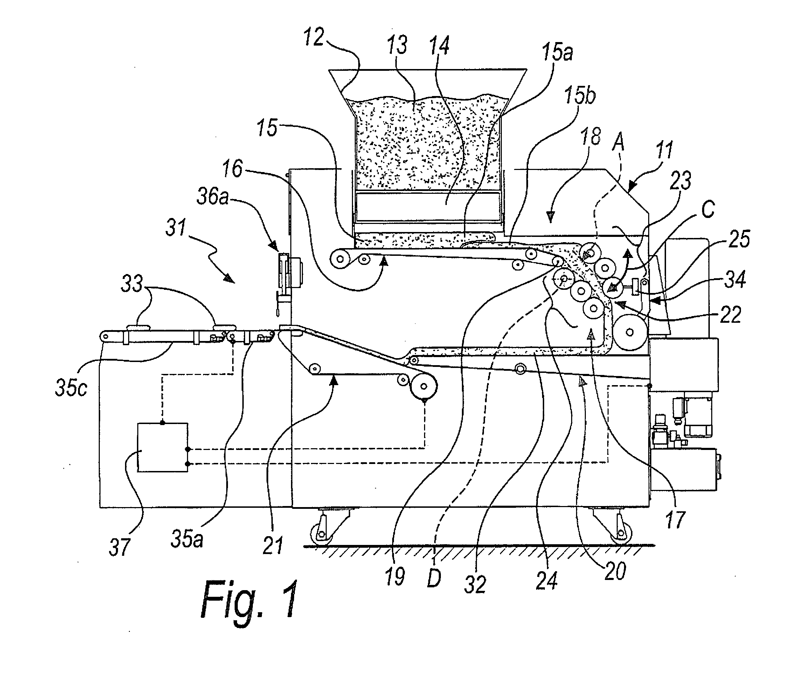

The oscillation means 25 are shown only schematically in Figure 1, able to be actuated, depending on the contingent needs, with the technical structures known today; for example they can be implemented via a motor which operates, by means of a crankshaft device, on a support carrying the first roller set 23 and pivoted to the frame 11 coaxially with the upper end roller 26a of the second roller set 24.

Conveniently, the second roller set 24 is fixed to the frame 11, the oscillation means 25 being supported by the frame 11 and connected to the first roller set 23 to actuate, in use, its alternating oscillation C about the axis of oscillation D.

More specifically, the second roller set 24 is supported by the frame 11 conveniently tiltably to adjust its inclination so as to preset the thickness of the sheet of dough to be formed and the average inclination with respect to the horizontal line of the sheet to be formed, which conveniently is comprised between 42° and 45°, depending on the preset thickness for the sheet of dough to be formed.

In use, the minimum aperture of the discharge region 22 is conveniently smaller than the aperture of the loading region 18, i.e. conveniently the corresponding upper end rollers 26a and 27a respectively of the second roller set 24 and of the first roller set 23 are spaced apart by a distance that is greater than the minimum distance between the lower end rollers 26c and 27c respectively of the second 24 and of the first roller set 23.

Advantageously, the machine 10 further comprises actuation means 28 that are adapted to actuate the axial rotation of the rollers 26a, 26b, 26c, 27a, 27b and 27c of the roller sets 23 and 24.

In use the actuation means 28 define peripheral speeds of the rollers 26a, 26b, 26c, 27a, 27b and 27c that increase in the direction E of the rolling of the pieces of dough 15 in the rolling device 17.

More specifically, the actuation means 28 conveniently comprise a first gear train transmission 29 that interconnects the first rollers 26a, 26b and 26c that form the first roller set 23,
- a second gear train transmission 30 that interconnects the second rollers 27a, 26b and 26c that form the second roller set 24.

The transmissions 29 and 30 preferably have ratios of motion transmission between successive rollers of the first rollers 26a, 26b and 26c and between successive rollers of the second rollers 27a, 27b and 27c, that are larger than unity and increase in the rolling direction E.

Thus, the lower end rollers 26c and 27c, respectively of the second roller set 24 and of the first roller set 23, have faster peripheral speeds than the intermediate rollers 26b and 27b respectively of the second roller set 24 and of the first roller set 23, and also these have a faster peripheral speed than the the upper end rollers 26a and 27a respectively of the second roller set 24 and of the first roller set 23.

In this way a piece of dough 15 rolled between the roller sets 23 and 24 is subjected to pulling speeds that increase as it proceeds between them in the rolling direction E.

Thus, the roller sets 23 and 24 are pivoted to each other and the outer set, i.e. the first roller set 23, in use oscillates with an alternating motion, actuated by the oscillation means 25.

The second rollers 27a, 27b and 27c of the first roller set 23 thus have a motion component that is tangential with respect to the first rollers 26a, 26b and 26c that are opposite to them and form the second roller set 24, fixed to the frame 11.

This makes it possible to obtain the stretching of the fibers of the dough.

Moreover, the rotation motion of the oscillating second rollers 27a, 27b and 27c, is implemented so that in the opening step of oscillation, the relative axial rotation speed of the second rollers 27a, 27b and 27c, with respect to the second roller set 24, decreases, whereas in the closing step it increases.

This effect is combined with the effect of the tangential motion component and makes it possible to obtain an alternating stretching of the lower and upper fibers of the sheet of dough being formed, thus improving the effect of rolling over what can be obtained with machines known currently.

The machine 10 further advantageously comprises a portion-forming device 31, for dividing the sheet of dough 32 formed by the rolling device 17 into portions, which is adapted to form portions 33 by cutting the sheet 32 to measure, such as for example described below.

In particular, the machine 10 conveniently also comprises a device 34 for dividing the sheet of dough 32 which is arranged behind the rolling device 17 and adapted to divide the sheet of dough 32 into two strips of dough which are substantially parallel.

Moreover, the portion-forming device 31 conveniently comprises
- two conveyor-weighing machines 35a and 35b supported by the frame 11 behind the second 21 of the two advancement devices 20 and 21 in order to receive from them the sheet of dough 32, to be weighed,
- two cutting devices 36a and 36b, conveniently of the guillotine type, arranged at the end part of the second advancement device 21,
- means of actuation of the cutting devices 36a and 36b, not shown in the accompanying figures, and arranged so as to actuate the cutting device 36a and 36b at time intervals that are substantially regular,
- an actuation device 37 connected to the advancement devices 20 and 21 and adapted to make the advancement speed of the sheet of dough 32,
which it carries, dependent on the weight detected by the conveyor-weighing machines 35a and 35b, so as to obtain successive portions 33 that have weights which are substantially identical.

Behind the two conveyor-weighing machines 35a and 35b conveniently there are two control conveyor-weighing machines 35c and 35d, for example identical to the conveyor-weighing machines 35a and 35b, which are supported by the frame 11 to receive from them the sheet of dough 32, coming from the conveyor-weighing machines 35a and 35b, and perform a control weighing of the weighing in use performed by the conveyor-weighing machines 35a and 35b.

Conveniently, the actuation device 37 controls the advancement speed of the sheet of dough 32, by controlling the advancement devices 20 and 21, based on the weight detected by the conveyor-weighing machines 35a and 35b and compared, for verification, with the weight detected by the control conveyor-weighing machines 35c and 35d.

In general, in a machine according to the invention, there can be at least one conveyor-weighing machine.

Conveniently, the second 21 of the advancement devices 20 and 21 comprises two parallel conveyor belts 21a and 21b each of which is adapted to carry one of the strips of dough.

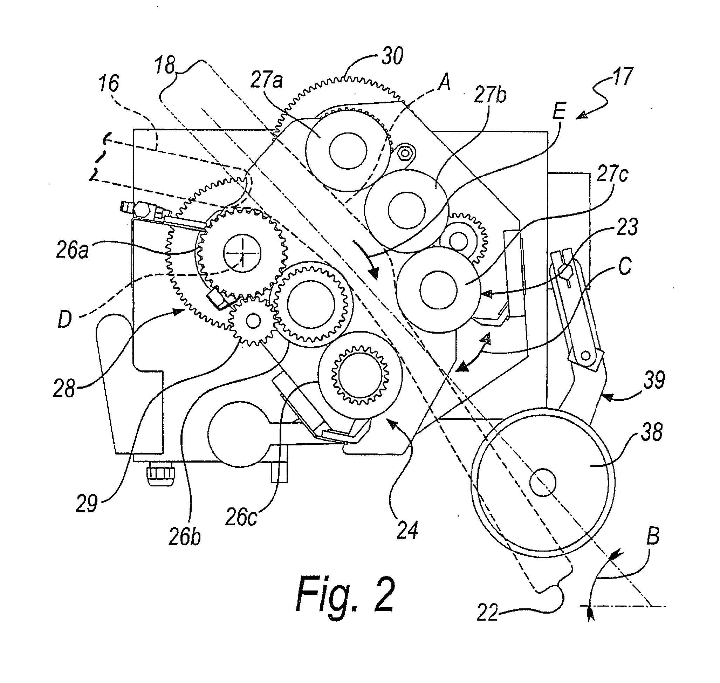

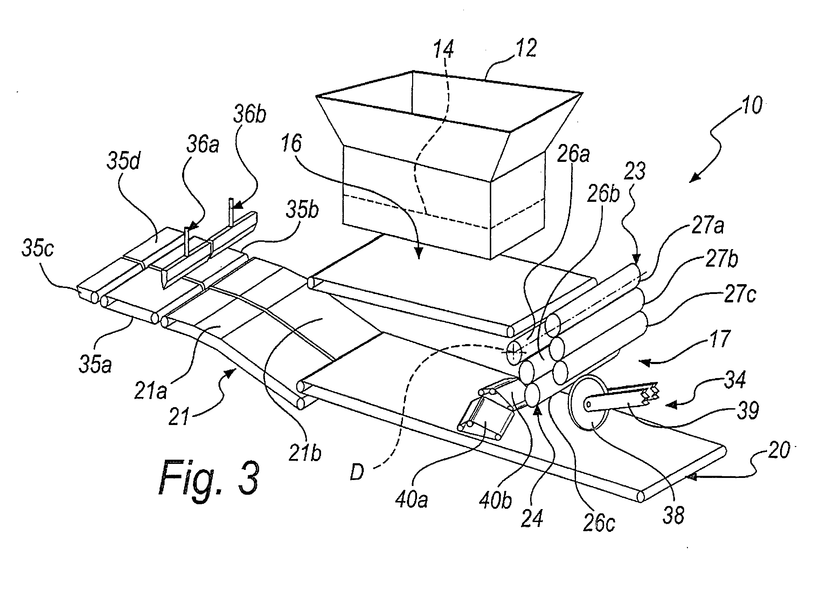

More specifically, the dividing device 34 advantageously comprises a blade 38 which is supported by an arm 39 that is pivoted to the frame 11 and actuated by a provided tilting device, not shown in the accompanying figures, which is adapted to move it on command,
- from an active configuration, in which the blade 38 skims the lower end roller 26c, of the second roller set 24, into a substantially central position thereof, so as to divide the sheet of dough 32 in output from the rolling device 17 into the strips of dough of substantially equal width, this active configuration being illustrated for the purposes of non-limiting example in Figure 3,
- to an inactive configuration, for example illustrated for the purposes of non-limiting example in Figures 1 and 2, in which the blade 38 is spaced from the lower end roller 26c, of the second roller set 24, so that the sheet of dough 32 is not divided longitudinally,
- and vice versa.

The dividing device 34 is conveniently provided with means for lubricating the surface of the blade 38, not shown in the accompanying figures, which are adapted to prevent the adhesion of the dough to the dividing device 34.

These lubrication means, for example but not necessarily so, can comprise a fork that is adapted to fork the blade 38 and is provided with oil-spraying nozzles, supplied by an adjustable air/oil pump, which are adapted to sprinkle the blade 38 with oil.

Advantageously there are also conveyor pads 40a and 40b to separate the sheet of dough 32 into the strips of dough.

Conveniently, the conveyor pads 40a and 40b are supported by a displacement device that, on command,
- when the blade 38 is in the active configuration, arranges them in an active arrangement with the conveyor pads 40a and 40b overlaid to skim the first advancement device 20 and acting in divergent directions so as to divaricate the strips of dough between them, this active arrangement being schematically illustrated for the purposes of non-limiting example in Figure 3,
- when the blade 38 is in the inactive configuration, arranges them in an inactive arrangement that has them spaced from the first advancement device 20 so as not to interfere with the sheet of dough 32,
- and vice versa.

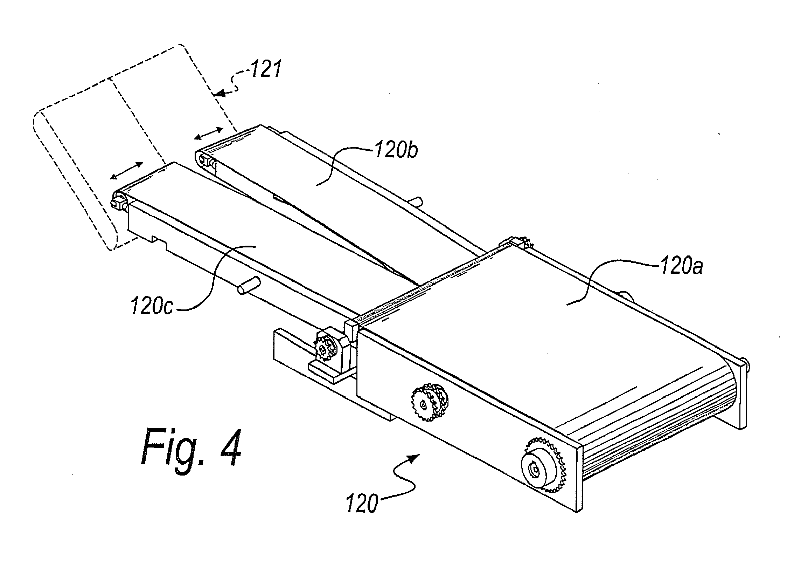

With particular reference to Figure 4, in an alternative and substantially equivalent embodiment of the invention, instead of conveyor pads 40a and 40b, conveniently the first advancement device, indicated with the reference numeral 120, comprises
- a first conveyor belt 120a, faced by the discharge region 22 of the rolling device 17,
- second conveyor belts 120b and 120c which are adapted to each receive one of the strips of dough in order to separate them during their transfer to the second advancement device, here indicated with the reference numeral 121.

The conveyor belts 120b and 120c are conveniently supported by the frame 11 and divarication means are connected to them, not shown in the accompanying figures, which are adapted to reversibly divaricate them in scissors' fashion, in the direction of advancement of the sheet 32.

In this way, the divarication means, on command, arrange the conveyor belts 120b and 120c so that
- when the blade 38 is in the active configuration, the conveyor belts 120b and 120c are divaricated, in order to divaricate between them the strips of dough,
- when the blade 38 is in the inactive configuration, the conveyor belts 120b and 120c are rejoined.

Advantageously, there are containment edges that are adapted to protrude between the divaricated conveyor belts 120b and 120c in the active configuration, interposing themselves between the strips of dough to prevent their rejoining.

In the inactive configuration, the edges are lowered between the conveyor belts 120b and 120c so as not to interfere with the sheet of dough 32.

Operation of a machine 10, according to the invention, is as follows.

Successive pieces of dough 15, overlapping each other at their head ends 15a and tail ends 15b, are fed by the conveyor 16 into the rolling device 17.

In the rolling device 17, the pieces of dough 15 descend between the roller sets 23 and 24, substantially resting on the second roller set 24 while the first roller set 23 beats alternately on them because it is moved according to the alternating oscillation C.

In this way, the pieces of dough 15, processed in the rolling device, undergo a substantially constant stretching action on their face in contact with the second roller set 24, due to the constant velocity of the first rollers 26a, 26b and 26c.

On the other hand, the stretching action of the first roller set 23 on the pieces of dough 15 being rolled is alternating.

Indeed, the speed, relative to the dough being processed, of the periphery of the second rollers 27a, 27b and 27c is constituted by the combination of their peripheral rotation speed with the speed of their periphery, constituted by their tilting motion according to the alternating oscillation C.

The result of this combination leads to having a speed of action of the second rollers 27a, 27b and 27c on the dough which
- is higher than their peripheral rotation speed, during the step, in the alternating oscillation C, of approach of the first roller set 23 to the second roller set 24, and which
- is less than their peripheral rotation speed, during the step, in the alternating oscillation C, of divarication of the first roller set 23 from the second roller set 24.

Thus, in a rolling device 17, of a machine 10 according to the invention, the dough during the sheet-forming undergoes an alternating stretching of its opposite faces, with respect to its core, thus obtaining, as will be clear to a technician skilled in the art, a sheet of higher quality than the sheets that can be obtained with the machines known today.

The sheet of dough 32, rolled, is made to advance by the advancement devices 20 and 21, optionally divided by the blade 38 and separated to form the strips of dough by the conveyor pads 40a and 40b.

Thus the advancement devices 20 and 21 feed the sheet of dough 32 onto the conveyor-weighing machines 35a and 35b, upstream of which the cutting devices 36a and 36b operate and at regular intervals cut the sheet of dough 32 to form the portions 33.

The actuation device 37 regulates the feeding speed of the sheet of dough 32 for obtaining portions 33 of uniform weight.

In practice it has been found that the invention fully achieves the intended aim and objects by providing a machine for processing dough, particularly for baking bread, which makes it possible to obtain a sheet of dough of higher quality than the sheets for baking bread that can be obtained with the machines known today.

A machine according to the invention is also more compact than the machines known today for the same quantity of dough that can be processed, and indeed the roller sets substantially form two concordant facing curves, defining a curved path, substantially according to a cylindrical arc, for the dough to be rolled and so, for the same length of the path which, in machines known today, is straight and vertical, a machine according to the invention makes it possible to have a more compact rolling device.

A machine according to the invention also makes it possible to obtain portions of dough of the same weight and with a fixed rhythm thus facilitating a combination with other machines arranged downstream, dedicated to subsequent processing.

Indeed, in a machine according to the invention the cutting of the sheet to form the portions is actuated at regular intervals by modulating the speed of the sheet to be cut as a function of the weight of its section to be cut.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any, according to requirements and to the state of the art.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A machine for processing dough, particularly of the type for baking bread, comprising a frame (11) which supports
- a hopper (12) for loading dough (13) to be processed,
- means (14) for cutting pieces (15) of said dough to be processed (13) discharged from said hopper (12),
- a conveyor (16), which is arranged below said hopper (12) to receive said pieces of dough (15),
- a rolling device (17), which has a loading region (18) that faces the discharge end (19) of said conveyor (16) and is offset with respect to said hopper (12) so that it is not surmounted by it,
- at least one advancement device (20, 21), faced by the discharge region (22) of said rolling device (17),
Wherein said rolling device (17) comprises two facing roller sets (23, 24), which form between them a descent passage (A) for said pieces of dough (15), said passage (A) being curved, during use, with respect to a horizontal arrangement and being inclined, with respect to said arrangement, with an average inclination (B) that is substantially comprised between 30° and 60°, said roller sets (23, 24) being pivoted to each other so that they can mutually oscillate and means (25) being provided for the mutual oscillation of said roller sets (23, 24) with an alternating oscillation (C) for spacing and approach, and
wherein the machine further comprises:
a portion-forming device (31) for dividing into portions the sheet of dough (32) formed by said rolling device (17), said portion-forming device (31) comprising:
- at least one conveyor-weighing machine (35a, 35b) and at least one control conveyor-weighing machine (35c and 35d), which are supported by said frame (11) in succession with respect to said at least one advancement device (20, 21), so as to receive from it said sheet of dough (32), to be weighed,
- at least one cutting device (36a, 36b), which is provided at an end part of said at least one advancement device (20, 21),
- means for actuating at least one cutting device (36a, 36b) at substantially regular intervals, and
- a device (37) for actuating said at least one advancement device (20, 21), adapted to make the advancement speed of said sheet of dough (32) dependent on the weight detected by said at least one conveyor-weighing machine (35a, 35b) and by said at least one control conveyor-weighing machine (35c and 35d), in order to obtain successive portions (33) that have substantially identical weights.

2. The machine according to claim 1, wherein said passage (A) has, during use, a curvature with the concavity directed downward.

3. The machine according to one or more of the preceding claims, wherein a first roller set (23) of said roller sets (23, 24) is pivoted to the second one of said roller sets (23, 24) about an oscillation axis (D) that is defined by the axis of a selected roller of said second roller set (24).

4. The machine according to one or more of the preceding claims, wherein said selected roller is the upper end roller (26a) of said second roller set (24).

5. The machine according to one or more of the preceding claims, wherein said second roller set (24) is fixed on said frame (11), said oscillation means (25) being supported by said frame (11) and being connected to said first roller set (23) so as to actuate, during use, said alternating oscillation (C) thereof about said oscillation axis (D).

6. The machine according to one or more of the preceding claims, wherein during use the minimum aperture of said discharge region (22) is smaller than the aperture of said loading region (18).

7. The machine according to one or more of the preceding claims, wherein the machine comprises actuation means (28) for actuating the axial rotation of the rollers (26a, 26b, 26c, 27a, 27b, 27c) of said roller sets (23, 24), which, during use, define peripheral speeds of said rollers (26a, 26b, 26c, 27a, 27b, 27c) that increase in the direction (E) of the rolling of said pieces of dough (15) in said rolling device (17).

8. The machine according to claim 7, wherein said actuation means (28) comprise
- a first gear train transmission (29) that interconnects first rollers (26a, 26b, 26c) that form said first roller set (23),
- a second gear train transmission (30) that interconnects second rollers (27a, 26b, 26c) that form said second roller set (24),
said transmissions (29, 30) having ratios of motion transmission between successive rollers (26a, 26b, 26c, 27a, 27b, 27c) that are greater than unity and increase in said rolling direction (E).

9. The machine according to one or more of the preceding claims, wherein the machine comprises a device (34) for dividing said sheet of dough (32) formed by said rolling device (17) which is arranged in succession with respect to said rolling device (17) and adapted to divide said sheet of dough (32) into at least two substantially parallel sheets.

10. The machine according to one or more of the preceding claims, wherein said dividing device (34) comprises a blade (38), which is supported by an arm (39) that is pivoted to the frame (11) and is actuated by a tilting device adapted to move it on command
- from an active configuration, in which the blade (38) skims said lower end roller (26c) of the second roller set (24) in a substantially central position thereof, to divide the sheet of dough (32) in output from said rolling device (17) into said strips of dough of substantially equal width,
- to an inactive configuration, in which said blade (38) is spaced from said lower end roller (26c),
- and vice versa,
means for lubricating said blade being provided which are adapted to spray it with oil to prevent its adhesion to the dough that it cuts during use.

11. The machine according to one or more of the preceding claims, wherein the machine comprises containment edges that are adapted to protrude reversibly between said divaricated conveyor belts (120b, 120c) in said active configuration, interposing themselves between said strips of dough so as to prevent their rejoining.

## Patentansprüche

1. Eine Maschine für die Verarbeitung von Teig, insbesondere von Teig zum Backen von Brot, die einen Rahmen (11) umfasst, welcher Folgendes trägt:
- einen Trichter (12) zum Hineingeben von zu verarbeitendem Teig (13),
- Mittel (14) zum Schneiden von Stücken (15) des zu verarbeitenden Teigs (13), der aus dem Trichter (12) abgegeben wird,
- einen Förderer (16), der unter dem Trichter (12) angeordnet ist, um die Teigstücke (15) zu empfangen,
- eine Walzvorrichtung (17), die einen Ladebereich (18) hat, welcher dem Auslassende (19) des Förderers (16) zugewandt und im Verhältnis zu dem Trichter (12) versetzt ist, so dass er davon nicht überragt wird,
- mindestens eine Vorschubvorrichtung (20, 21), die dem Auslassbereich (22) der Walzvorrichtung (17) zugewandt ist,
wobei die Walzvorrichtung (17) zwei einander zugewandte Walzensätze (23, 24) umfasst, die zwischen sich einen Abstiegsdurchgang (A) für die Teigstücke (15) bilden, wobei der Durchgang (A) im Gebrauch im Verhältnis zu einer horizontalen Anordnung gekrümmt und im Verhältnis zu der Anordnung mit einer durchschnittlichen Neigung (B) geneigt ist, die im Wesentlichen zwischen 30° und 60° beträgt, wobei die Walzensätze (23, 24) gelenkig miteinander verbunden sind, so dass sie im Verhältnis zueinander schwingen können, und wobei Mittel (25) für das Schwenken der Walzensätze (23, 24) zueinander mit einer abwechselnden Schwenkung (C) für die Bewegung zueinander und voneinander fort bereitgestellt sind, und
wobei die Maschine weiter Folgendes umfasst:
eine Portionen bildende Vorrichtung (31) zum Teilen der Teigschicht (32), die von der Walzvorrichtung (17) geformt wird, in Portionen, wobei die Portionen bildende Vorrichtung (31) Folgendes umfasst:
- mindestens eine Bandwaage (35a, 35b) und mindestens eine Kontroll-Bandwaage (35c und 35d), die von dem Rahmen (11) hintereinander im Verhältnis zu der mindestens einen Vorschubvorrichtung (20, 21) getragen werden, um von ihr die zu wiegende Teigschicht (32) zu erhalten,
- mindestens eine Schneidevorrichtung (36a, 36b), die an einem Endteil der mindestens einen Vorschubvorrichtung (20, 21) angebracht ist,
- Mittel zur Betätigung mindestens einer Schneidevorrichtung (36a, 36b) in im Wesentlichen regelmäßigen Abständen, und
- eine Vorrichtung (37) zur Betätigung der mindestens einen Vorschubvorrichtung (20, 21), ausgebildet, um die Vorschubgeschwindigkeit der Teigschicht (32) abhängig von dem Gewicht zu machen, das von der mindestens einen Bandwaage (35a, 35b) und von der mindestens einen Kontroll-Bandwaage (35c und 35d) gemessen wird, um aufeinanderfolgende Portionen (33) zu erhalten, die im Wesentlichen identische Gewichte haben.

2. Die Maschine gemäß Anspruch 1, worin der Durchgang (A) im Gebrauch eine Krümmung hat, bei der die Rundhöhlung nach unten gerichtet ist.

3. Die Maschine gemäß einem oder mehreren der obigen Ansprüche, worin ein erster Walzensatz (23) der Walzensätze (23, 24) um eine Schwenkachse (D), die durch die Achse einer ausgewählten Walze des zweiten Walzensatzes (24) bestimmt wird, gelenkig mit dem zweiten der Walzensätze (23, 24) verbunden ist.

4. Die Maschine gemäß einem oder mehreren der obigen Ansprüche, worin die ausgewählte Walze die obere Endwalze (26a) des zweiten Walzensatzes (24) ist.

5. Die Maschine gemäß einem oder mehreren der obigen Ansprüche, worin der zweite Walzensatz (24) an dem Rahmen (11) befestigt ist, wobei die Schwenkmittel (25) von dem Rahmen (11) getragen werden und mit dem ersten Walzensatz (23) verbunden sind, um während des Gebrauchs die alternierende Schwenkung (C) desselben um die Schwenkachse (D) zu aktivieren.

6. Die Maschine gemäß einem oder mehreren der obigen Ansprüche, wobei während des Gebrauchs die geringste Öffnung des Auslassbereichs (22) kleiner ist als die Öffnung des Ladebereichs (18).

7. Die Maschine gemäß einem oder mehreren der obigen Ansprüche, wobei die Maschine Betätigungsmittel (28) zur Betätigung der axialen Drehung der Walzen (26a, 26b, 26c, 27a, 27b, 27c) der Walzensätze (23, 24) umfasst, die im Gebrauch periphere Geschwindigkeiten der Walzen (26a, 26b, 26c, 27a, 27b, 27c) bestimmen, die in die Richtung (E) des Rollens der Teigstücke (15) in der Walzvorrichtung (17) zunehmen.

8. Die Maschine gemäß Anspruch 7, wobei die Betätigungsmittel (28) Folgendes umfassen:
- ein erstes Getriebe (29), das erste Walzen (26a, 26b, 26c) miteinander verbindet, welche den ersten Walzensatz (23) bilden,
- ein zweites Getriebe (30), das zweite Walzen (27a, 26b, 26c) miteinander verbindet, welche den zweiten Walzensatz (24) bilden,
wobei die Getriebe (29, 30) Verhältnisse der Bewegungsübertragung zwischen aufeinanderfolgenden Walzen (26a, 26b, 26c, 27a, 27b, 27c) haben, die größer als die Einheit sind, und in die Walzrichtung (E) zunehmen.

9. Die Maschine gemäß einem oder mehreren der obigen Ansprüche, wobei die Maschine eine Vorrichtung (34) zum Teilen der von der Walzvorrichtung (17) geformten Teigschicht (32) umfasst, welche hinter der Walzvorrichtung (17) angeordnet und ausgebildet ist, um die Teigschicht (32) in mindestens zwei im Wesentlichen parallele Schichten zu teilen.

10. Die Maschine gemäß einem oder mehreren der obigen Ansprüche, wobei die Trennvorrichtung (34) ein Messer (38) umfasst, das von einem Arm (39) getragen wird, welcher gelenkig mit dem Rahmen (11) verbunden ist und von einer Kippvorrichtung betätigt wird, die ausgebildet ist, um ihn auf Befehl wie folgt zu bewegen:
- aus einer aktiven Anordnung, in welcher das Messer (38) die untere Endwalze (26c) des zweiten Walzensatzes (24) in einer im Wesentlichen zentralen Position davon streift, um die Teigschicht (32) in der Ausgabe von der Walzvorrichtung (17) in Teigstreifen von im Wesentlichen gleicher Breite zu teilen,
- in eine inaktive Anordnung, in der das Messer (38) von der unteren Endwalze (26c) beabstandet ist,
- und umgekehrt,
wobei Mittel zum Schmieren des Messers bereitgestellt sind, die ausgebildet sind, um es mit Öl zu besprühen, um seine Haftung am Teig, den es im Gebrauch schneidet, zu verhindern.

11. Die Maschine gemäß einem oder mehreren der obigen Ansprüche, wobei die Maschine Einschließungskanten umfasst, die ausgebildet sind, um in der aktiven Anordnung reversibel zwischen den verzweigten Förderbändern (120b, 120c) herauszuragen und sich zwischen die Teigstreifen zwischenzustellen, um ihre erneute Vereinigung zu verhindern.

## Revendications

1. Machine pour traiter de la pâte, en particulier du type pour cuire du pain, comprenant un bâti (11) qui supporte :
- une trémie (12) pour charger de la pâte (13) devant être traitée,
- des moyens (14) pour couper des morceaux (15) de ladite pâte devant être traitée (13) déchargés à partir de ladite trémie (12),
- un convoyeur (16), qui est disposé en dessous de ladite trémie (12) de façon à recevoir lesdits morceaux de pâte (15),
- un dispositif de roulement (17), qui comporte une région de chargement (18) qui fait face à l'extrémité de décharge (19) dudit convoyeur (16) et qui est décalée vis-à-vis de ladite trémie (12) de telle sorte qu'elle ne soit pas surmontée par celle-ci,
au moins un dispositif d'avance (20, 21), faisant face à la région de décharge (22) dudit dispositif de roulement (17),
dans laquelle ledit dispositif de roulement (17) comprend deux jeux de rouleaux en vis-à-vis (23, 24), qui forment entre eux un passage de descente (A) pour lesdits morceaux de pâte (15), ledit passage (A) étant incurvé, durant l'utilisation, par rapport à un agencement horizontal, et étant incliné, par rapport audit agencement, d'une inclinaison moyenne (B) qui est sensiblement comprise entre 30° et 60°, lesdits jeux de rouleaux (23, 24) pivotant l'un par rapport à l'autre de telle sorte qu'ils puissent osciller mutuellement, et des moyens (25) étant disposés pour l'oscillation mutuelle desdits jeux de rouleaux (23, 24) avec une oscillation alternée (C) pour l'espacement et le rapprochement, et
dans laquelle la machine comprend de plus :
un dispositif de formation de portions (31) pour diviser en portions la feuille de pâte (32) formée par ledit dispositif de roulement (17), ledit dispositif de formation de portions (31) comprenant :
- au moins une machine de convoyeur et de pesage (35a, 35b) et au moins une machine de convoyeur et de pesage de commande (35c et 35d), qui sont supportées par ledit bâti (11) en succession par rapport audit au moins un dispositif d'avance (20, 21), de façon à recevoir à partir de celui-ci ladite feuille de pâte (32), devant être pesée,
- au moins un dispositif de coupe (36a, 36b), qui est disposé au niveau d'une partie d'extrémité dudit au moins un dispositif d'avance (20, 21),
- des moyens pour actionner au moins un dispositif de coupe (36a, 36b) à des intervalles sensiblement réguliers, et
- un dispositif (37) pour actionner ledit au moins un dispositif d'avance (20, 21), adapté de façon à faire dépendre la vitesse d'avance de ladite feuille de pâte (32) du poids détecté par ladite au moins une machine de convoyeur et de pesage (35a, 35b) et par ladite au moins une machine de convoyeur et de pesage de commande (35c et 35d), de façon à obtenir des portions successives (33) qui ont des poids sensiblement identiques.

2. Machine selon la revendication 1, dans laquelle ledit passage (A) a, durant l'utilisation, une courbure avec la concavité dirigée vers le bas.

3. Machineselon l'une ou plusieurs des revendications précédentes, dans laquelle un premier jeu de rouleaux (23) desdits jeux de rouleaux (23, 24) pivote par rapport au deuxième desdits jeux de rouleaux (23, 24) autour d'un axe d'oscillation (D) qui est défini par l'axe d'un rouleau sélectionné dudit deuxième jeu de rouleaux (24).

4. Machine selon l'une ou plusieurs des revendications précédentes, dans laquelle ledit rouleau sélectionné est le rouleau d'extrémité supérieure (26a) dudit deuxième jeu de rouleaux (24).

5. Machine selon l'une ou plusieurs des revendications précédentes, dans laquelle ledit deuxième jeu de rouleaux (24) est fixé sur ledit bâti (11), lesdits moyens d'oscillation (25) étant supportés par ledit bâti (11) et étant reliés audit premier jeu de rouleaux (23) de façon à actionner, durant l'utilisation, ladite oscillation alternée (C) de celui-ci autour dudit axe d'oscillation (D).

6. Machine selon l'une ou plusieurs des revendications précédentes, dans laquelle, durant l'utilisation, l'ouverture minimale de ladite région de décharge (22) est plus petite que l'ouverture de ladite région de chargement (18).

7. Machine selon l'une ou plusieurs des revendications précédentes, dans laquelle la machine comprend des moyens d'actionnement (28) pour actionner la rotation axiale des rouleaux (26a, 26b, 26c, 27a, 27b, 27c) desdits jeux de rouleaux (23, 24), qui, durant l'utilisation, définissent des vitesses périphériques desdits rouleaux (26a, 26b, 26c, 27a, 27b, 27c) qui augmentent dans la direction (E) du roulement desdits morceaux de pâte (15) dans ledit dispositif de roulement (17).

8. Machine selon la revendication 7, dans laquelle lesdits moyens d'actionnement (28) comprennent :
- une première transmission à train d'engrenages (29) qui interconnecte des premiers rouleaux (26a, 26b, 26c) qui forment ledit premier jeu de rouleaux (23),
- une deuxième transmission à train d'engrenages (30) qui interconnecte des deuxièmes rouleaux (27a, 26b, 26c) qui forment ledit deuxième jeu de rouleaux (24),
lesdites transmissions (29, 30) ayant des rapports de transmission de mouvement entre des rouleaux successifs (26a, 26b, 26c, 27a, 27b, 27c) qui sont supérieurs à l'unité et qui augmentent dans ladite direction de roulement (E).

9. Machine selon l'une ou plusieurs des revendications précédentes, dans laquelle la machine comprend un dispositif (34) pour diviser ladite feuille de pâte (32) formée par ledit dispositif de roulement (17), qui est disposé à la suite par rapport audit dispositif de roulement (17), et adapté de façon à diviser ladite feuille de pâte (32) en au moins deux feuilles sensiblement parallèles.

10. Machine selon l'une ou plusieurs des revendications précédentes, dans laquelle ledit dispositif de division (34) comprend une lame (38), qui est supportée par un bras (39) qui pivote par rapport au bâti (11) et qui est actionné par un dispositif d'inclinaison adapté de façon à déplacer celui-ci sur commande :
- d'une configuration active, dans laquelle la lame (38) parcourtledit rouleau d'extrémité inférieure (26c) du deuxième jeu de rouleaux (24) dans une position sensiblement centrale de celui-ci, de façon à diviser la feuille de pâte (32) en sortie dudit dispositif de roulement (17) en desdites bandes de pâte de largeur sensiblement égale,
- à une configuration inactive, dans laquelle ladite lame (38) est espacée dudit rouleau d'extrémité inférieure (26c),
- et inversement,
des moyens pour lubrifier ladite lame étant prévus, ceux-ci étant adaptés pour pulvériser de l'huile sur celle-ci afin d'empêcher son adhérence à la pâte qu'elle coupe durant l'utilisation.

11. Machine selon l'une ou plusieurs des revendications précédentes, dans laquelle la machine comprend des bords de confinement qui sont adaptés de façon à faire saillie de façon réversible entre lesdites courroies convoyeuses mutuellement écartées (120b, 120c) dans ladite configuration active, s'interposant entre lesdites bandes de pâte de façon à empêcher leur réunion.
